# FASCICULE DE BREVET EUROPEEN

(11) **EP 0 879 652 B1**
(45) Date de publication et mention de la délivrance du brevet: **20.03.2002**
(21) Numéro de dépôt: 98400787.2
(22) Date de dépôt: 02.04.1998
(51) Int. Cl.: B09B 3/00

(54) **Dispositif et installation de récupération de carburant contenu dans un réservoir d'un véhicule automobile ayant une paroi en matière plastique**
Vorrichtung und Anlage zum Rückgewinnen von Brennstoff, enthalten in einem Fahrzeugtank mit einer Wand aus Kunststoffmaterial
Device and installation for recovering fuel contained in a vehicle tank having a wall of a plastic material

(30) Priorité: 07.04.1997 FR 9704190; 31.10.1997 FR 9713728
(43) Date de publication de la demande: 25.11.1998
(73) Titulaire: AUTOMOBILES PEUGEOT, 75116 Paris (FR); AUTOMOBILES CITROEN, 92200 Neuilly-sur-Seine (FR)
(72) Inventeur: Dumont, Philippe, 78800 Houilles (FR); Merien, Daniel, 95520 Osny (FR); Pellerano, Joseph, 95280 Jouy-le-Moutier (FR)
(74) Mandataire: Bouget, Lucien

(56) Documents cités:
- DE-A- 4 000 172
- DE-C- 4 243 966
- DE-U- 29 616 266

## Description

L'invention concerne un dispositif et une installation de récupération de carburant contenu dans un réservoir d'un véhicule automobile ayant une paroi en matière plastique.

Avant de broyer ou de démonter un véhicule hors d'usage aux fins de recyclage, il est indispensable de procéder au préalable à la vidange de tous les liquides qu'il contient dans ses tubulures, réservoirs ou flacons. Cette vidange est particulièrement importante pour le carburant en raison du danger potentiel qu'il représente, pour des raisons écologiques en raison de la pollution qu'il provoque lorsqu'il est répandu sur le sol et pour des raisons économiques de réutilisation du carburant récupéré.

La conception moderne des réservoirs de véhicules automobiles rend cette vidange particulièrement difficile par des moyens classiques. En effet, les réservoirs de carburant ne comportent pas de bouchon de vidange comme les carters d'huile. Les réservoirs modernes sont constitués par des compartiments reliés par un petit canal. Cette conception a notablement contribué à une meilleure tenue de route des véhicules automobiles en évitant l'effet d'inertie représenté par le poids du carburant dans les virages et contribue à augmenter la sécurité à bord des véhicules. De plus, un réservoir ainsi compartimenté permet un passage plus aisé des diverses tuyauteries (échappement, transmission hydraulique, électricité, etc...,) jusqu'à l'arrière du véhicule tout en assurant une garde au sol raisonnable.

Le réservoir ainsi compartimenté ne présente plus une forme géométrique classique et les fonds de ses différents compartiments ne sont pas à la même hauteur. Le point le plus bas du réservoir n'est pas toujours le plus proche de la tuyauterie de remplissage.

Ces dispositions ne permettent pas de vidanger entièrement le réservoir en introduisant le tuyau d'une pompe dans le conduit par le bouchon de remplissage. Encore faut-il que ce conduit ne soit pas obstrué et que le mécanisme de verrouillage du bouchon de remplissage ne soit pas bloqué (véhicules accidentés, véhicules anciens, etc, ...).

La solution la plus répandue aujourd'hui est, après avoir placé le véhicule à vidanger sur un pont élévateur, de percer la paroi du réservoir à l'aide d'un outil pointu comme un burin ou une pioche, dans chaque poche constituée par chaque compartiment pour obtenir des orifices d'écoulement plus ou moins gravitaires à l'air libre. Le carburant est recueilli dans des récipients d'où il est acheminé vers des lieux de stockage. Cette manipulation de carburant et le fait que l'environnement est constitué par des gaz inflammables et explosifs ne sont pas sans danger. Une autre solution consiste à utiliser un outil de perçage par percussion actionné par un vérin hydraulique ou par un moyen mécanique. Ce procédé, s'il convient aux réservoirs métalliques, ne peut s'appliquer aux réservoirs en matière plastique en raison de l'élasticité de cette matière et de sa déformation pendant le perçage, ce qui rend le résultat assez aléatoire.

En outre le coût total du recyclage du véhicule doit rester aussi faible que possible, ainsi est-il important de minimiser le coût de main d'oeuvre lors de la phase de démontage de ses différents éléments constitutifs.

Dans le cas de réservoirs de carburant de véhicules automobiles ayant une paroi métallique, on a proposé des dispositifs de récupération comportant un boîtier ayant une forme en cloche, un axe monté mobile en rotation et en translation dans une paroi du boîtier, un outil de perçage à une première extrémité de l'axe qui comporte des moyens de fixation sur un élément moteur à sa seconde extrémité opposée à la première et située à l'extérieur du boîtier. L'outil de perçage est réalisé de manière à assurer l'écoulement du carburant contenu dans le réservoir à l'intérieur du boîtier, après qu'on ait réalisé le perçage d'un trou dans la paroi du réservoir. Des moyens d'évacuation tels que des conduites et des pompes permettent de faire passer le carburant du boîtier à un récipient de récupération du carburant. Le dispositif de perçage est généralement réalisé sous la forme d'un foret qui peut être associé à un outil d'élargissement du trou réalisé par le foret.

Les dispositifs connus de l'art antérieur ne sont généralement pas applicables ou présentent des inconvénients dans le cas de réservoir de carburant ayant une paroi en matière plastique.

En particulier, l'utilisation d'un foret ou d'un élargisseur rotatif présente des inconvénients dans le cas où il est nécessaire d'effectuer le perçage d'une paroi souple en matière plastique.

Il est nécessaire de prévoir sur l'outil de perçage des moyens d'écoulement du carburant à l'intérieur du boîtier du dispositif de récupération et de maintenir le boîtier du dispositif au contact de la paroi du réservoir en appliquant une poussée sur le dispositif d'entraînement moteur de l'outil ou sur une poignée prévue à cet effet sur le boîtier, pendant toute la durée nécessaire pour obtenir l'écoulement du carburant contenu dans le réservoir. Il faut en effet assurer une application étanche de l'extrémité du boîtier contre la paroi du réservoir autour de l'ouverture de vidange.

La nécessité de maintenir le dispositif dans son ensemble contre la paroi du réservoir entraîne des difficultés accrues pour utiliser le dispositif, que ce soit de manière entièrement manuelle ou en utilisant des moyens de manutention et de maintien du dispositif.

Le but de l'invention est donc de proposer un dispositif de récupération de carburant contenu dans un réservoir d'un véhicule automobile ayant une paroi en matière plastique, comportant un boîtier en forme de cloche, un arbre monté mobile dans le boîtier, en rotation autour de son axe et en translation dans la direction axiale, un outil de perçage fixé à une première extrémité de l'arbre, des moyens de liaison de l'arbre à un moteur d'entraînement à la seconde extrémité de l'arbre opposée à la première, à l'extérieur du boîtier, et des moyens de récupération de carburant dans le boîtier après le perçage d'un trou de vidange à travers la paroi du réservoir, ce dispositif de récupération permettant d'améliorer les conditions de perçage de la paroi en matière plastique, d'assurer le maintien du boîtier de récupération du carburant contre la paroi du réservoir après le perçage et de faciliter l'utilisation du dispositif, de manière manuelle ou à l'aide de moyens de manutention.

Dans ce but, l'outil de perçage comporte successivement, dans le sens allant de la première vers la seconde extrémité de l'outil, une scie-cloche et un taraud permettant le taraudage du bord de l'ouverture de perçage réalisé par découpage d'une partie de forme circulaire de la paroi du réservoir.

De préférence, l'outil de perçage comporte de plus, en saillie axiale vers l'extérieur par rapport à la scie-cloche, à sa première extrémité, un foret de centrage pour le positionnement de l'outil de perçage sur la paroi du réservoir.

L'arbre du dispositif de récupération est solidaire, de préférence, d'une butée à bille destinée à venir en appui contre le boîtier pour limiter la course de l'outil de perçage.

Afin de bien faire comprendre l'invention, on va maintenant décrire, à titre d'exemple, en se référant aux figures jointes en annexe, un mode de réalisation d'un dispositif de récupération de carburant suivant l'invention.

La figure 1 est une vue schématique en élévation et en coupe partielle d'une installation de récupération de carburant comportant le dispositif de récupération suivant l'invention en position de service en-dessous du réservoir de carburant d'un véhicule automobile.

La figure 2 est une vue en coupe axiale d'un dispositif de récupération suivant l'invention dans une première position fonctionnelle, avant le perçage de la paroi d'un réservoir de carburant.

La figure 3 est une vue en coupe axiale du dispositif suivant l'invention dans une seconde position fonctionnelle après perçage de la paroi du réservoir de véhicule automobile.

La figure 4 est une vue en coupe suivant 4-4 de la figure 2 ou de la figure 3.

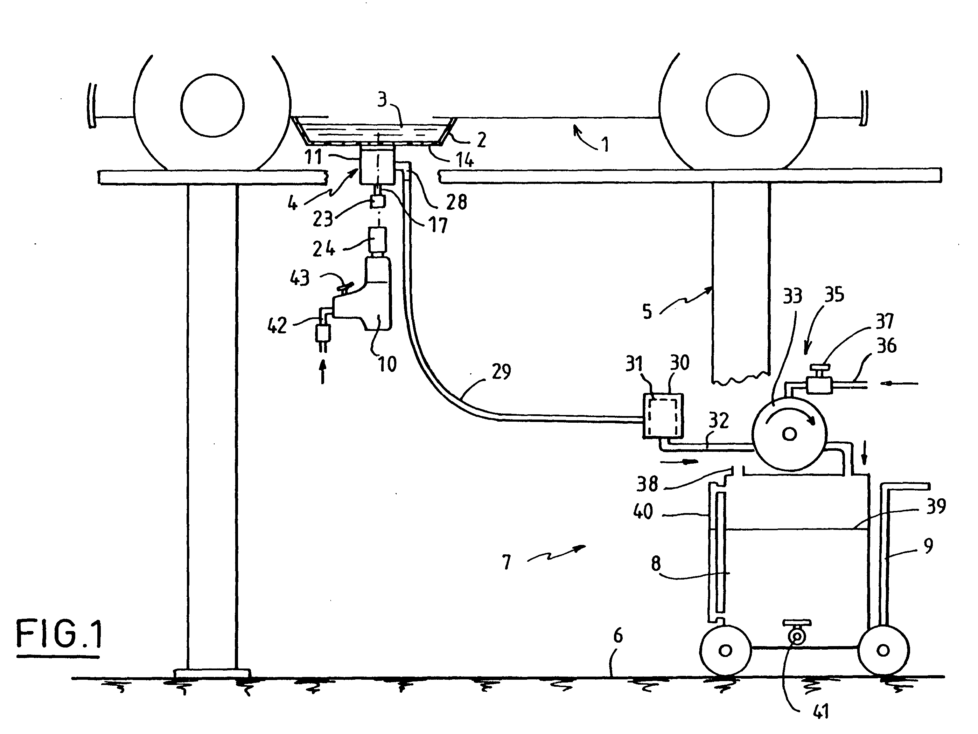

Sur la figure 1, on voit la partie inférieure d'un véhicule automobile désignée de manière générale par le repère 1 comportant un réservoir 2 contenant du carburant 3 dont on veut effectuer la récupération complète avant de démonter le véhicule à des fins de recyclage.

De manière à pouvoir accéder à la partie inférieure du véhicule automobile 1 par le dessous, pour placer le dispositif 4 de récupération de carburant contre une surface inférieure de la paroi du réservoir 2, le véhicule automobile 1 est placé sur un pont élévateur 5 pour être soulevé au-dessus du sol 6 de l'atelier, à une hauteur suffisante.

Le dispositif de récupération 4 de carburant qui sera décrit plus en détail par la suite est associé à une installation de récupération de carburant désignée de manière générale par le repère 7 et comportant principalement un récipient de stockage de carburant 8 monté sur un chariot 9 se déplaçant sur le sol 6 de l'atelier et un outil pneumatique 10 d'entraînement en rotation de l'outil de perçage du dispositif de récupération 4.

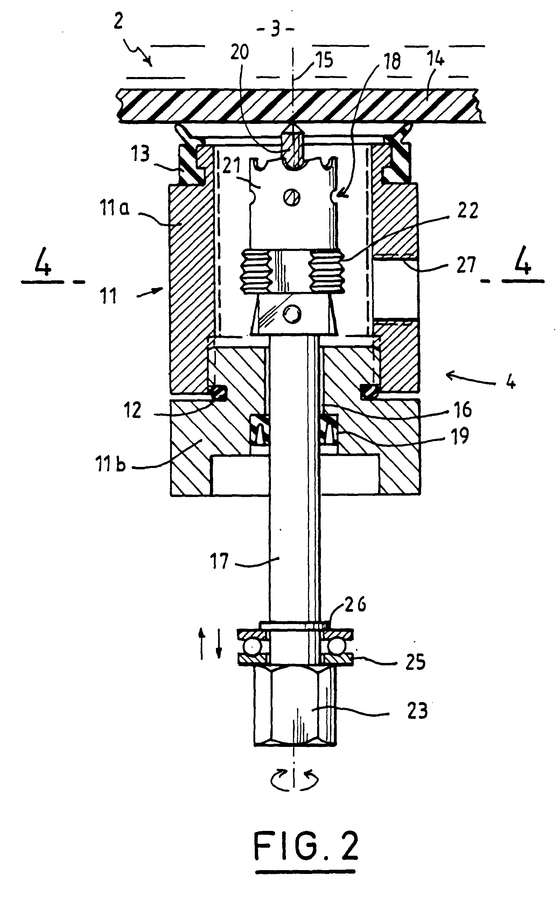

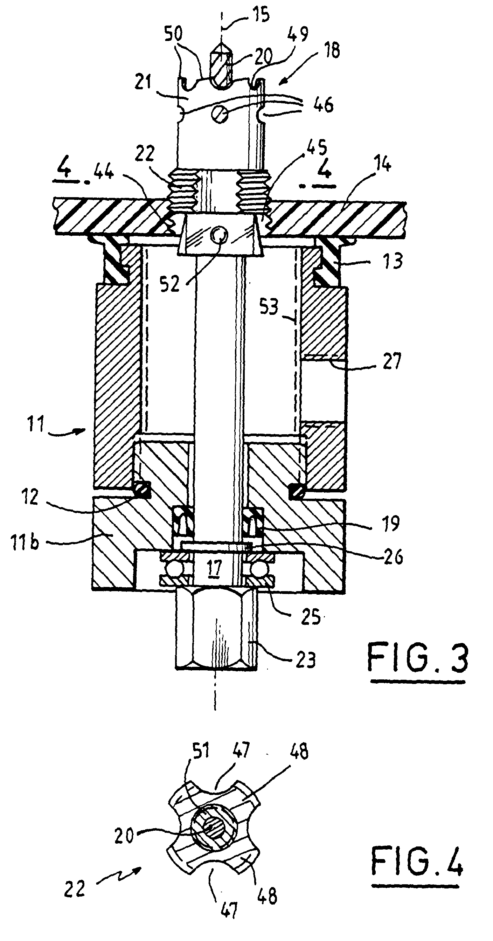

Comme il est visible sur les figures 2 et 3, le dispositif de récupération de carburant 4 comporte un boîtier 11 en forme de cloche comportant un corps cylindrique 11a ouvert à l'une de ses extrémités et fermé à sa seconde extrémité par un fond 11b qui peut être fixé de manière amovible dans la partie d'extrémité du corps 11a. Pour cela, la partie d'extrémité du corps 11a comporte un taraudage interne et le fond 11b comporte une extrémité filetée qui peut être vissée dans la partie taraudée du corps 11a. Le fond 11b comporte également une gorge dans laquelle est disposé un joint d'étanchéité 12 qui est serré, lors du vissage du fond 11b dans le corps 11a du boîtier 11, entre le fond 11b et le corps 11a de manière à assurer une fermeture étanche de la partie d'extrémité inférieure de l'espace interne du boîtier 11.

Le corps 11a est muni, sur toute sa périphérie, à son extrémité opposée au fond de fermeture 11b, d'un joint à lèvre 13 qui peut être appliqué avec une certaine pression par poussée sur le boîtier 11, contre la paroi en matière plastique 14 du réservoir 2, pour assurer une certaine fixation par effet ventouse du boîtier 11 contre la paroi 14 du réservoir 2. On assure également ainsi une certaine étanchéité entre la partie d'extrémité du boîtier 11 et la surface extérieure de la paroi 14 du réservoir 2.

Le fond de fermeture 11b du boîtier 11 est traversé, suivant l'axe 15 du boîtier, par une ouverture 16 de passage d'un arbre 17 d'entraînement en rotation autour de l'axe 15 et en translation axiale dans la direction de l'axe 15, d'un outil de perçage 18 fixé à une première extrémité de l'arbre 17 située dans l'espace interne du boîtier 11 (dans la position avant perçage représentée sur la figure 2).

L'arbre 17 traverse de manière étanche l'ouverture 16 de traversée du fond 11b grâce à un joint d'étanchéité 19 compressible introduit dans une gorge usinée dans le fond 11b autour de la partie d'extrémité inférieure de l'ouverture de traversée 16. Le joint 19 assure une étanchéité autour de l'arbre 17 monté mobile en rotation et en translation dans le boîtier 11.

L'outil de perçage 18 est fixé à la première extrémité de l'arbre 17 et comporte, successivement, dans le sens allant de la première vers la seconde extrémité de l'arbre 17, un foret de centrage 20, une scie-cloche 21 et un taraud 22 disposés de manière coaxiale et ayant tous pour axe l'axe géométrique 15 du boîtier 11 et de l'arbre 17 d'entraînement de l'outil 18.

Comme il est visible sur la figure 4, le taraud 22 comporte quatre échancrures 47 délimitant quatre parties actives 48 de taraudage présentant un filet externe d'usinage, disposées à 90° l'une de l'autre autour de l'axe du taraud.

Les dents 50 de la scie-cloche 21 sont en forme de créneaux et sont séparées par des découpes 49 dont le fond est circulaire. L'arête supérieure des dents 50 est droite et légèrement inclinée par rapport à un plan perpendiculaire à l'axe de la scie-cloche.

Les différentes parties de l'outil de perçage 18 peuvent être fixées l'une sur l'autre et à l'extrémité de l'axe 17, de manière amovible.

De préférence, l'arbre 17 comporte une partie d'extrémité filetée 51 qui est vissée dans un alésage central taraudé du taraud 22. Le foret de centrage 20 est solidaire de la scie-cloche 21 et comporte une tige engagée dans un alésage du taraud 22 et dans un alésage de l'arbre 17, de direction axiale et dans le prolongement l'un de l'autre. Une vis 52 engagée dans un trou taraudé d'une partie d'extrémité élargie de l'arbre 17 permet d'immobiliser le foret et la scie-cloche. Le taraud 22 est intercalé entre la scie-cloche 21 et la partie d'extrémité élargie de l'arbre 17.

A sa seconde extrémité opposée à la première extrémité sur laquelle est fixé l'outil de perçage 18, l'arbre 17 du dispositif de récupération porte une pièce profilée 23 destinée à coopérer avec une partie d'entraînement 24 de l'outil moteur pneumatique 10 (voir figure 1) pour assurer l'entraînement en rotation de l'outil 18, par l'intermédiaire de l'arbre 17.

Par exemple, la pièce profilée 23 à la seconde extrémité de l'arbre 17 peut présenter une section transversale hexagonale et la pièce d'entraînement en rotation 24 de l'outil moteur pneumatique 10 peut présenter une ouverture à section hexagonale de forme et de dimension correspondantes, de manière qu'on puisse engager la pièce 23 dans l'ouverture de la pièce 24 avec un faible jeu.

Au-dessus de la pièce d'extrémité profilée 23, est fixée autour de l'arbre 17, par l'intermédiaire d'un circlips 26, une butée à billes 25 susceptible de venir en appui contre le boîtier 11, à l'intérieur d'une cavité à la partie inférieure du boîtier, en fin de perçage de la paroi 14 du réservoir, comme il est visible sur la figure 3.

Le corps cylindrique 11a du boîtier 11 en forme de cloche est traversé par une ouverture 27 taraudée, dans laquelle peut être fixé par vissage un ajutage 28 de raccordement d'un conduit d'évacuation 29 au boîtier 11, comme il est visible sur la figure 1.

Le conduit d'évacuation 29 est relié, à son extrémité opposée à l'ajutage 28, à un filtre 30 dans lequel est disposé un tamis de filtration 31 délimitant, à l'intérieur de l'enceinte du filtre 30, une partie d'entrée à laquelle est reliée l'extrémité du conduit d'évacuation 29 et une partie de sortie à laquelle est reliée une première extrémité d'un conduit 32 dont la seconde extrémité est reliée à la partie d'aspiration d'une pompe 33 entraînée par un moteur pneumatique. La partie de refoulement de la pompe 33 est elle-même reliée à la partie supérieure du récipient 8 de récupération de carburant.

La pompe 33 est entraînée par de l'air comprimé, par l'intermédiaire d'une conduite d'air comprimé 36 et d'une vanne 37 de l'entraînement pneumatique 35.

Le réservoir 8 comporte à sa partie supérieure un aérateur 38 constitué par une conduite d'éventage.

Le niveau de carburant 39 dans le réservoir 8 est visible à travers une paroi d'une colonne de contrôle de niveau 40 communiquant avec le réservoir 8 à sa partie inférieure et à sa partie supérieure. On peut ainsi contrôler le niveau de remplissage du réservoir 8 qui doit être vidangé sur place ou déplacé vers une zone de vidange dans l'atelier de récupération lorsqu'il est plein de carburant et ne peut plus assurer le recueil de carburant provenant d'un réservoir d'un véhicule automobile.

Une vanne de vidange 41 à la partie inférieure du récipient de récupération et de stockage 8 permet d'en assurer la vidange complète.

L'outil 10 constituant le moyen moteur d'entraînement de l'arbre 17 de l'outil de perçage du dispositif de récupération 4 est entraîné par de l'air comprimé, par l'intermédiaire d'une conduite pneumatique 42. L'outil pneumatique 10 est de type manuel et comporte un moyen de commande manuel tel qu'une gâchette 43. L'outil 10 peut être par exemple constitué par une perceuse ou une visseuse pneumatique.

Pour effectuer la récupération du carburant dans le réservoir 2 d'un véhicule automobile 1, on place le véhicule automobile sur le pont élévateur 5 de manière à le faire monter jusqu'au niveau voulu pour pouvoir accéder facilement à la paroi inférieure 14 du réservoir par le dessous du pont 5.

L'installation de vidange 7 telle que représentée sur la figure 1 est mise en place sous le véhicule en utilisant le chariot 9 pour déplacer le réservoir 8, de manière que le réservoir 8 se trouve dans une disposition peu éloignée de l'aplomb du réservoir 2. De cette manière, on peut placer manuellement le dispositif de récupération 4 relié au réservoir 8 par l'intermédiaire de la conduite souple d'évacuation 29, du filtre 30 de la conduite 32 et de la pompe 33, dans sa position de service représentée sur les figures 1 et 2. Dans cette position, la partie supérieure ouverte du boîtier 11 est en contact avec la surface inférieure de la paroi 14 du réservoir par l'intermédiaire du joint à lèvres 13. Par poussée sur le boîtier 11, on peut assurer le contact et la retenue du dispositif par effet ventouse contre la paroi 14.

On engage alors la partie d'entraînement en rotation 24 de l'outil moteur pneumatique 10 sur la pièce profilée d'extrémité 23 de l'arbre 17 du dispositif de récupération 4. On exerce une poussée sur l'outil 10 et on actionne la gâchette de commande 43, de manière à mettre en rotation l'arbre 17 et l'outil 18 qui vient en contact par l'intermédiaire du foret de centrage 20 avec la surface inférieure de la paroi 14 en matière plastique du réservoir 2.

Le foret de centrage 20 pénètre dans la paroi 14 et assure ainsi le centrage et le positionnement de l'outil 18 par rapport à la paroi 14.

En continuant à exercer une poussée sur l'outil pneumatique constituant le moteur d'entraînement de l'arbre 17, on met en contact la scie-cloche 21 solidaire en rotation de l'arbre 17, avec la paroi 14. La scie-cloche 21 réalise le découpage d'une partie de forme circulaire de la paroi 14 ayant pour axe l'axe géométrique 15 suivant lequel on déplace l'arbre 17 et l'outil 18. La rondelle de matière plastique, détachée de la paroi 14 à l'issue du découpage par la scie-cloche 21, est retenue à l'intérieur de la paroi de la scie-cloche 21, autour du foret de centrage 20.

En continuant à exercer une poussée sur l'outil pneumatique 10 et en maintenant la gâchette 43 appuyée, on fait pénétrer le taraud 22 à l'intérieur de l'ouverture découpée dans la paroi 14. Le taraud 22 présente un diamètre externe maximal légèrement supérieur au diamètre de la scie-cloche 21, de sorte que le taraud 22 effectue un taraudage du bord 44 de l'ouverture 45 réalisée par la scie-cloche 21. Le taraud 22 réalise un filetage sur le bord de l'ouverture.

La butée à bille 25 est placée sur l'axe 17, de manière à venir en appui sur le fond 11b du boîtier 11, dans le fond de la cavité inférieure, de la manière représentée sur la figure 3, après une certaine course du taraud 22.

De préférence, la butée 25 est placée et réglée sur l'arbre 17 de manière qu'on obtienne la mise en butée et I 'arrêt de la translation dans la direction de l'axe géométrique 15 de l'outil 18, lorsque le taraud 22 est parvenu aux deux-tiers de sa course à l'intérieur de l'ouverture 45.

Même si l'opérateur continue à actionner la gâchette 43 de l'outil pneumatique moteur 10, le filetage 44 n'est pas détérioré par le taraud qui tourne en glissant dans le taraudage.

Lorsqu'il détecte la mise en appui de la butée, l'opérateur relâche la gâchette 43 de l'outil 10. On peut alors séparer l'outil 10 de l'axe 7 de l'outil de perçage en désengageant les parties 24 et 23.

Le dispositif de récupération 4, séparé de l'outil 10, reste accroché à la paroi 14 en matière plastique du réservoir 2, grâce au filet de l'ouverture 45 sur lequel le taraud 22 est en appui. Les échancrures 47 du taraud entre les parties actives filetées 48 permettent le passage du carburant du réservoir 2 à l'espace interne du boîtier 11.

Le carburant s'écoulant à l'intérieur du boîtier 11 est aspiré à travers la conduite d'évacuation 29, le filtre 30 et la conduite 32 par la pompe 33 et refoulé à l'intérieur du réservoir de stockage 8.

A titre de variante, il serait possible d'utiliser un réservoir de stockage 8 relié à l'espace interne du boîtier 11 du dispositif de récupération 4, par l'intermédiaire d'un conduit tel que le conduit 29, d'un filtre tel que le filtre 30 et d'une conduite de liaison de la partie de sortie du filtre avec le réservoir de stockage 8, sans pompe d'aspiration du carburant. En plaçant le réservoir de stockage dans une zone voisine d'une zone située à l'aplomb du réservoir 2 du véhicule, on peut réaliser l'évacuation par gravité du carburant dans le réservoir de stockage 8.

Pendant la vidange du réservoir 2, il n'est pas nécessaire d'étayer le boîtier 11 au contact de la paroi 14 du réservoir 2, le boîtier étant maintenu par l'outil de perçage 18 comportant le taraud 22, comme expliqué plus haut. En outre, l'espace interne du boîtier 11 dans lequel s'écoule le carburant est fermé de manière étanche à la partie supérieure du boîtier, par le joint à lèvres 13 qui est comprimé contre la paroi 14 du réservoir, comme représenté sur la figure 3 et, à sa partie inférieure, par les joints d'étanchéité 12 et 19.

Le carburant évacué par l'ouverture 27 du boîtier et la conduite d'évacuation 29, fixée par l'ajutage 28 dans l'ouverture 27 est filtré par le tamis 31 du filtre 30 qui arrête les particules de matière plastique qui ont été formées lors du découpage et du perçage de l'ouverture 25 et qui peuvent être entraînées par le carburant s'écoulant dans l'espace interne du boîtier 11 puis dans la conduite d'évacuation 29.

Le carburant filtré, récupéré dans le réservoir de stockage 8, peut donc être réutilisé sans opération complémentaire.

De manière à améliorer la filtration et à éviter l'entraînement de copeaux de plastique dans la conduite d'évacuation 29, on peut placer, dans l'espace interne du boîtier 11, un tamis de filtre 53 centré dans le fond du boîtier 11 et constituant une crépine pour la conduite d'évacuation 29.

Lorsque la vidange complète du réservoir 2 a été réalisée, on engage à nouveau la pièce d'entraînement 24 du moteur pneumatique 10 sur la pièce d'extrémité 23 de l'axe 17 et on met le moteur pneumatique en rotation dans le sens inverse du sens précédent pour assurer le dévissage et l'extraction du taraud 22 à travers l'ouverture taraudée 45 puis la séparation du dispositif de récupération 4 de la paroi 14 du réservoir.

On extrait alors la rondelle de matière plastique de la partie interne de la scie-cloche 21. Cette extraction de la scie-cloche est réalisée grâce à la présence d'au moins une ouverture 46 dans la surface latérale de la scie-cloche 21.

On peut également dévisser le fond 11b du boîtier 11, de manière à éliminer les copeaux de matière plastique retenus dans l'espace interne du boîtier 11. On peut également réaliser le nettoyage à la soufflette du tamis de filtre 53 jouant le rôle de crépine. On remet en place le fond 11b du boîtier 11. Le dispositif de récupération est alors prêt pour une nouvelle opération sur un réservoir de véhicule automobile ou sur un second compartiment du réservoir dont on a réalisé le perçage et la vidange d'un premier compartiment;

Le dispositif suivant l'invention permet donc de réaliser très facilement et très rapidement, de manière successive, la vidange de réservoirs ou de compartiments de réservoirs ayant des parois en matière plastique.

Le carburant récupéré peut être réutilisé immédiatement après sa récupération.

La manipulation du dispositif suivant l'invention est facile et ne requiert pas d'opération pénible. En particulier, le dispositif de récupération est maintenu sans intervention contre la paroi du réservoir, pendant toute la vidange du carburant.

L'invention ne se limite pas au mode de réalisation qui a été décrit.

C'est ainsi que la butée d'arrêt de l'outil de perçage peut être remplacée par un palier à roulement solidaire du fond 11b du boîtier 11 dans lequel l'arbre 17 est monté glissant. L'arrêt de l'outil est alors assuré par la mise en butée de la pièce 23 sur le palier à roulement qui assure le guidage de l'arbre rotatif pendant toute l'utilisation de l'outil.

La scie-cloche utilisée pour le découpage d'une partie circulaire de la paroi du réservoir en matière plastique peut être de préférence une scie-cloche de découpage en carbure. De tels outils sont commercialisés et peuvent être utilisés sans modification pour équiper le dispositif de récupération suivant l'invention.

Les ouvertures de passage du carburant à travers le taraud engagé dans le trou de la paroi du réservoir peuvent être différentes d'échancrures dans la surface latérale d'usinage du taraud

En outre, les pièces constitutives du dispositif de récupération peuvent être en des matériaux divers, par exemple des matériaux métalliques tels que l'aluminium ou des matériaux plastiques tels que le nylon.

L'invention s'applique à la récupération de carburant dans tout réservoir de véhicule automobile ayant une paroi en matière plastique.

## Revendications

1. Dispositif de récupération de carburant contenu dans un réservoir (2) d'un véhicule automobile ayant une paroi (14) en matière plastique, comportant un boîtier (11), en forme de cloche, un arbre (17) monté mobile dans le boîtier (11), en rotation autour de son axe (15) et en translation dans la direction axiale (15), un outil de perçage (18) fixé à une première extrémité de l'arbre (17), des moyens de liaison (23) de l'arbre (17) à un moteur d'entraînement (10), à la seconde extrémité de l'arbre (17) opposée à la première extrémité, à l'extérieur du boîtier (11), et des moyens (27, 28, 29) de récupération de carburant dans le boîtier (11), après le perçage d'un trou de vidange dans la paroi (14) du réservoir (2), **caractérisé par le fait que** l'outil de perçage (18) comporte successivement, dans le sens allant de la première vers la seconde extrémité de l'arbre (17), une scie-cloche (21) et un taraud (22) permettant le taraudage du bord (44) du trou de vidange (45) réalisé par découpage d'une partie de forme circulaire de la paroi du réservoir (2).

2. Dispositif de récupération suivant la revendication 1, **caractérisé par le fait que** l'outil de perçage (18) comporte de plus, en saillie axiale vers l'extérieur par rapport à la scie-cloche (21) un foret de centrage (20).

3. Dispositif de récupération suivant l'une quelconque des revendications 1 et 2, **caractérisé par le fait que** l'arbre (17) est solidaire, au voisinage de sa seconde extrémité, d'une butée à bille (25) pour la mise en appui de l'arbre (17) contre le boîtier (11) et l'arrêt du déplacement dans la direction axiale de l'outil de perçage (18), après une course de perçage prédéterminée.

4. Dispositif de récupération suivant la revendication 3, **caractérisé par le fait qu'**il comporte un palier à roulement monté dans une paroi du boîtier (11) dans lequel l'arbre (17) est monté rotatif et glissant, un arrêt du déplacement dans la direction axiale (15) de l'outil de perçage (18) étant assuré par mise en appui des moyens de liaison (23) de l'arbre (17) sur le palier à roulement.

5. Dispositif de récupération suivant l'une quelconque des revendications 1 à 4, **caractérisé par le fait que** le boîtier (11) comporte un corps tubulaire (11a) et un fond (11b) monté de manière amovible et étanche à une extrémité du corps (11a) et traversé par une ouverture (16) de passage de l'arbre (17).

6. Dispositif de récupération suivant la revendication 5, **caractérisé par le fait qu'**un joint à lèvre souple (13) est monté à la périphérie de l'extrémité du corps (11a) du boîtier (11) en forme de cloche, ouverte et opposée au fond (11b).

7. Dispositif de récupération suivant l'une quelconque des revendications 1 à 6, **caractérisé par le fait qu'**une paroi du boîtier (11) est traversée par une ouverture (27) dans laquelle est fixé un ajutage (28) permettant de mettre en communication l'espace interne du boîtier (11) avec une conduite d'évacuation de carburant (29).

8. Dispositif de récupération suivant l'une quelconque des revendications 1 à 7, **caractérisé par le fait que** la scie-cloche (21) comporte, dans une partie de surface latérale, au moins une ouverture (46) pour l'extraction de la partie de forme circulaire de la paroi du réservoir découpée par la scie-cloche (21), à l'issue du perçage.

9. Dispositif de récupération suivant l'une quelconque des revendications 1 à 8, **caractérisé par le fait qu'**un tamis de filtre (53) est disposé à l'intérieur de l'espace interne du boîtier (11) de manière à arrêter des débris de matière plastique produits au cours du perçage, le tamis de filtre à l'intérieur du boîtier (11) jouant le rôle de crépine vis-à-vis des moyens de récupération de carburant (27, 28, 29).

10. Dispositif de récupération suivant l'une quelconque des revendications 1 à 9, **caractérisé par le fait que** le taraud (22) comporte dans sa surface latérale d'usinage des échancrures (47) délimitant des parties actives (48) du taraud (22) présentant un filet de taraudage.

11. Dispositif de récupération suivant l'une quelconque des revendications 1 à 10, **caractérisé par le fait que** la scie-cloche (21) comporte des dents (50) en forme de créneaux ayant une arête droite inclinée par rapport à un plan perpendiculaire à l'axe de la scie-cloche (21).

12. Installation de récupération de carburant contenu dans un réservoir (2) d'un véhicule automobile (1) ayant une paroi (14) en matière plastique, **caractérisée par le fait qu'**elle comporte un dispositif de récupération suivant l'une quelconque des revendications 1 à 11, un réservoir (8) de stockage de carburant relié aux moyens (27, 28, 29) de récupération de carburant et un outil à moteur pneumatique (10) comportant des moyens (24) destinés à coopérer avec les moyens de liaison (23) de l'arbre (17), de manière amovible, pour la mise en rotation de l'arbre (17) du dispositif de récupération (4).

13. Installation suivant la revendication 12, **caractérisée par le fait que** les moyens de récupération de carburant reliés au réservoir de stockage (8) comportent une conduite d'évacuation (29) reliée, à l'une de ses extrémités, au boîtier (11) du dispositif de récupération (4) et, à son autre extrémité, à une partie d'entrée d'un filtre (30) et une conduite (32) reliée à l'une de ses extrémités à une partie de sortie du filtre (30) et à son autre extrémité au réservoir de stockage de carburant (8).

14. Installation suivant la revendication 13, **caractérisée par le fait qu'**une pompe d'aspiration (33) est disposée sur la conduite d'évacuation (32), entre le filtre (30) et le réservoir de stockage (8).

15. Installation suivant la revendication 14, **caractérisée par le fait que** la pompe (33) est entraînée par des moyens (35, 36, 37) d'alimentation en air comprimé.

16. Installation suivant l'une quelconque des revendications 12 à 15, **caractérisée par le fait que** le réservoir de stockage (8) est monté sur un chariot (9) pour le déplacement du réservoir de stockage (8) sur le sol (6) d'un atelier de récupération.

17. Installation suivant la revendication 16, **caractérisée par le fait qu'**elle comporte, dans l'atelier de récupération, un pont élévateur (5) de véhicule automobile (1).

## Patentansprüche

1. Vorrichtung zur Rückgewinnung von Kraftstoff, die in einem eine Wand (14) aus Kunststoff besitzenden Behälter (2) eines Kraftfahrzeugs enthalten ist, mit einem glockenförmigen Gehäuse (11), einer im Gehäuse (11) beweglich angebrachten Welle (17), die sich um ihre Achse (15) drehen und in axialer Richtung (15) verschieben kann, einem Lochungswerkzeug (18), das an einem ersten Ende der Welle (17) befestigt ist, Mitteln (23) zum Verbinden der Welle (17) mit einem Antriebsmotor (10) am zweiten Ende der Welle (17) gegenüber dem ersten Ende außerhalb des Gehäuses (11) und Mitteln (27, 28, 29) zur Rückgewinnung von Kraftstoff im Gehäuse (11) nach der Ausbildung eines Entleerungslochs in der Wand (14) des Behälters (2), **dadurch gekennzeichnet, daß** das Lochungswerkzeug (18) nacheinander in Richtung vom ersten zum zweiten Ende der Welle (17) eine Glockensäge (21) und einen Gewindebohrer (22) umfaßt, der das Schneiden eines Gewindes in den Rand (44) des Entleerungslochs (45) ermöglicht, das durch Ausschneiden eines kreisförmigen Teils aus der Wand des Behälters (2) verwirklicht wird.

2. Rückgewinnungsvorrichtung nach Anspruch 1, **dadurch gekennzeichnet, daß** das Lochungswerkzeug (18) außerdem einen Zentrierbohrer (20) umfaßt, der in bezug auf die Glockensäge (21) axial nach außen vorsteht.

3. Rückgewinnungsvorrichtung nach einem der Ansprüche 1 und 2, **dadurch gekennzeichnet, daß** die Welle (17) in der Umgebung ihres zweiten Endes fest mit einem Kugelanschlag (25) zum Abstützen der Welle (17) am Gehäuse (11) und zum Anhalten der Verschiebung in axialer Richtung des Lochungswerkzeugs (18) nach einem vorgegebenen Lochungshub verbunden ist.

4. Rückgewinnungsvorrichtung nach Anspruch 3, **dadurch gekennzeichnet, daß** sie ein Wälzlager umfaßt, das in einer Wand des Gehäuses (11) angebracht ist, in dem die Welle (17) drehbar und gleitend angebracht ist, wobei ein Anhalten der Verschiebung in axialer Richtung (15) des Lochungswerkzeugs (18) durch Abstützen der Verbindungsmittel (23) der Welle (17) am Wälzlager sichergestellt ist.

5. Rückgewinnungsvorrichtung nach einem der Ansprüche 1 bis 4, **dadurch gekennzeichnet, daß** das Gehäuse (11) einen rohrförmigen Körper (11a) und einen Boden (11b) umfaßt, der an einem Ende des Körpers (11a) abnehmbar und dicht angebracht ist und durch den eine Öffnung (16) für den Durchgang der Welle (17) verläuft.

6. Rückgewinnungsvorrichtung nach Anspruch 5, **dadurch gekennzeichnet, daß** am Umfang des offenen und dem Boden (11b) gegenüberliegenden Endes des Körpers (11a) des glockenförmigen Gehäuses (11) eine biegsame Lippendichtung (13) angebracht ist.

7. Rückgewinnungsvorrichtung nach einem der Ansprüche 1 bis 6, **dadurch gekennzeichnet, daß** durch eine Wand des Gehäuses (11) eine Öffnung (27) verläuft, in der ein Anschlußstutzen (28) befestigt ist, der die Herstellung einer Verbindung zwischen dem Innenraum des Gehäuses (11) und einer Kraftstoffentleerungsleitung (29) ermöglicht.

8. Rückgewinnungsvorrichtung nach einem der Ansprüche 1 bis 7, **dadurch gekennzeichnet, daß** die Glockensäge (21) in einem Teil der seitlichen Oberfläche wenigstens eine Öffnung (46) für die Entnahme des kreisförmigen Teils der Behälterwand, der von der Glockensäge (21) am Ende der Lochung ausgeschnitten wird, umfaßt.

9. Rückgewinnungsvorrichtung nach einem der Ansprüche 1 bis 8, **dadurch gekennzeichnet, daß** im Innenraum des Gehäuses (11) ein Filtersieb (53) in der Weise angeordnet ist, daß Kunststoffabfälle, die bei der Lochung erzeugt werden, aufgefangen werden, wobei das Filtersieb im Gehäuse (11) die Rolle eines Schutzfilters für die Kraftstoffrückgewinnungsmittel (27, 28, 29) spielt.

10. Rückgewinnungsvorrichtung nach einem der Ansprüche 1 bis 9, **dadurch gekennzeichnet, daß** der Gewindeschneider (22) in seiner seitlichen Bearbeitungsoberfläche bogenförmige Aussparungen (47) aufweist, die aktive Teile (48) des Gewindeschneiders (22), die Gewindeschneidgänge besitzen, begrenzen.

11. Rückgewinnungsvorrichtung nach einem der Ansprüche 1 bis 10, **dadurch gekennzeichnet, daß** die Glockensäge (21) zackenförmige Zähne (50) umfaßt, die eine gerade Kante besitzen, die in bezug auf eine zur Achse der Glockensäge (21) senkrechte Ebene geneigt sind.

12. Kraftstoffrückgewinnungsanlage, die in einem eine Kunststoffwand (14) besitzenden Behälter (2) eines Kraftfahrzeugs (1) enthalten ist, **dadurch gekennzeichnet, daß** sie eine Rückgewinnungsvorrichtung nach einem der Ansprüche 1 bis 11, einen Kraftstoffspeicherbehälter (8), der mit den Kraftstoffrückgewinnungsmitteln (27, 28, 29) verbunden ist, und ein Druckluftmotor-Werkzeug (10), das Mittel (24) aufweist, die dazu bestimmt sind, mit den Verbindungsmitteln (23) der Welle (17) lösbar zusammenzuwirken, um die Welle (17) der Rückgewinnungsvorrichtung (4) in Drehung zu versetzen, umfaßt.

13. Anlage nach Anspruch 10, **dadurch gekennzeichnet, daß** die Kraftstoffrückgewinnungsmittel, die mit dem Speicherbehälter (8) verbunden sind, eine Entleerungsleitung (29) umfassen, die mit einem ihrer Enden mit dem Gehäuse (11) der Rückgewinnungsvorrichtung (4) verbunden ist und mit ihrem anderen Ende mit einem Einlaßabschnitt eines Filters (30) und mit einer Leitung (32) verbunden ist, die mit einem ihrer Enden mit einem Auslaßabschnitt des Filters (30) und mit ihrem anderen Ende mit dem Kraftstoffspeicherbehälter (8) verbunden ist.

14. Anlage nach Anspruch 13, **dadurch gekennzeichnet, daß** in der Entleerungsleitung (32) zwischen dem Filter (30) und dem Speicherbehälter (8) eine Saugpumpe (33) angeordnet ist.

15. Anlage nach Anspruch 14, **dadurch gekennzeichnet, daß** die Pumpe (33) durch Mittel (35, 36, 37), die mit Druckluft versorgt werden, angetrieben wird.

16. Anlage nach einem der Ansprüche 12 bis 15, **dadurch gekennzeichnet, daß** der Speicherbehälter (8) an einem Schlitten (9) angebracht ist, um den Speicherbehälter (8) auf dem Boden (6) einer Rückgewinnungswerkstatt zu bewegen.

17. Anlage nach Anspruch 16, **dadurch gekennzeichnet, daß** sie in der Rückgewinnungswerkstatt eine Hebebühne (5) für das Kraftfahrzeug (1) umfaßt.

## Claims

1. Device for recovering fuel contained in a vehicle tank (2) having a wall (14) made from a plastic material, with a bell-shaped housing (11), a shaft (17) mounted so as to be movable in the housing (11) in rotation about its axis (15) and in translation in the axial direction (15), a piercing tool (18) fixed on a first end of the shaft (17), means (23) for connecting the shaft (17) to a drive motor (10) on the second end of the shaft (17) opposite the first end outside the housing (11), and means (27, 28, 29) for recovering fuel in the housing (11) after the piercing of a drainage hole in the wall (14) of the tank (2), **characterised in that** the piercing tool (18) has successively, in the direction from the first towards the second end of the shaft (17), a cutter (21) and a tapping (22) permitting the tapping of the edge (44) of the drainage hole (45) produced by cutting out a part of circular shape from the wall of the tank (2).

2. Device for recovering fuel as claimed in Claim 1, **characterised in that** the piercing tool (18) further includes a centre drill (20) projecting axially towards the exterior with respect to the cutter (21).

3. Device for recovering fuel as claimed in any one of Claims 1 and 2, **characterised in that** the shaft (17) is integral, in the vicinity of its second end, with a ball stop (25) for supporting the shaft (17) against the housing (11) and for stopping the movement of the piercing tool (18) in the axial direction after a predetermined piercing stroke.

4. Device for recovering fuel as claimed in Claim 3, **characterised in that** it includes a rolling bearing mounted in a wall of the housing (11) in which the shaft (17) is mounted so as to rotate and to slide, stopping of the movement of the piercing tool (18) in the axial direction (15) being ensured by supporting the means (23) for connecting the shaft (17) on the rolling bearing.

5. Device for recovering fuel as claimed in any one of Claims 1 to 4, **characterised in that** the housing (11) has a tubular body (11a) and a base (11b) which is mounted in a removable and sealed manner on one end of the body (11a) and has a passage (16) for the shaft passing through it.

6. Device for recovering fuel as claimed in Claim 5, **characterised in that** a flexible lip seal (13) is mounted on the periphery of the end of the body (11a) of the bell-shaped housing (11) which is open and opposite the base (11b).

7. Device for recovering fuel as claimed in any one of Claims 1 to 6, **characterised in that** a wall of the housing (11) has passing through it an opening (27) in which a nozzle (28) is fixed which enables the internal cavity of the housing (11) to communicate with a fuel discharge pipe (29).

8. Device for recovering fuel as claimed in any one of Claims 1 to 7, **characterised in that** the cutter (21) has in a lateral surface part at least one opening (46) through which the part of circular shape of the wall of the tank which is cut out by the cutter (21) can be extracted at the end of the piercing.

9. Device for recovering fuel as claimed in any one of Claims 1 to 8, **characterised in that** a filter screen (53) is disposed inside the internal cavity of the housing (11) in such a way as to stop the debris of plastic material produced in the course of the piercing, the filter screen inside the housing (11) serving as a strainer in relation to the means for recovering fuel (27, 28, 29).

10. Device for recovering fuel as claimed in any one of Claims 1 to 9, **characterised in that** the tap (22) has in its lateral machining surface cut-outs (47) which delimit active parts (48) of the tap (22) having a tapping thread.

11. Device for recovering fuel as claimed in any one of Claims 1 to 10, **characterised in that** the cutter (21) has teeth (50) in the form of castellations having a straight edge inclined with respect to a plane perpendicular to the axis of the cutter (21).

12. Installation for recovering fuel contained in a tank (2) of a vehicle (1) having a wall (14) made from plastic material, **characterised in that** it includes a device for recovering fuel as claimed in any one of Claims 1 to 11, a fuel storage tank (8) connected to the means (27, 28, 29) for recovering fuel and a pneumatic power tool (10) having means (24) intended to co-operate with the connecting means (23) of the shaft (17), in a removable manner, in order for the shaft (17) of the device (4) for recovering fuel to be set in rotation.

13. Installation as claimed in Claim 12, **characterised in that** the means for recovering fuel connected to the storage tank (8) have a discharge pipe (29) connected, at one of its ends, to the housing (11) of the device (4) for recovering fuel and, at its other end, to an inlet part of a filter (30) and a pipe (32) connected at one of its ends to an outlet part of the filter (30) and at its other end to the fuel storage tank (8).

14. Installation as claimed in Claim 13, **characterised in that** a suction pump is disposed on the discharge pipe (32) between the filter (30) and the storage tank (8).

15. Installation as claimed in Claim 14, **characterised in that** the pump (33) is driven by compressed air supply means (35, 36, 37).

16. Installation as claimed in any one of Claims 12 to 15, **characterised in that** the storage tank (8) is mounted on a trolley (9) for the movement of the storage tank (8) over the floor (6) of a recovery shop.

17. Installation as claimed in Claim 16, **characterised in that** it includes, in the recovery shop, a hydraulic ramp (5) for lifting the vehicle (1).
